# EUROPÄISCHE PATENTANMELDUNG

(11) **EP 0 809 121 A2**
(43) Veröffentlichungstag der Anmeldung: **26.11.1997**
(21) Anmeldenummer: 97106228.6
(22) Anmeldetag: 16.04.1997
(51) Int. Cl.: G01S 17/93, B60R 21/00

(54) **Vorrichtung zum Ausführen einer Sicherheitsmassnahme**

(30) Priorität: 23.05.1996 DE 19620886
(71) Anmelder: Bayerische Motoren Werke Aktiengesellschaft, 80788 München (DE)
(72) Erfinder: Weishaupt, Walter, 81247 München (DE)

(57) **Zusammenfassung**

Eine Vorrichtung zum Ausführen einer Sicherheitsmaßnahme bei einer die Gesundheit der Insassen gefährdenden seitlichen Annäherung eines Objektes an ein Fahrzeug besitzt einen im Fahrzeug angeordneten optischen Sensor mit mehreren fächerförmig zur Seite und nacheinander ausgesandten Lichtblitzen und diesen zugeordneten Empfängern und ferner eine Recheneinheit, die aus den von einem Objekt reflektierten Lichtblitzen dessen Annäherungsverhalten ermittelt und gegebenenfalls die Sicherheitsmaßnahme auslöst.

## Beschreibung

Die Erfindung bezieht sich auf eine Vorrichtung mit den Merkmalen des Oberbegriffs des Patentanspruchs 1.

Typischerweise werden als derartige Sicherheitsmaßnahmen das Auslösen eines Seiten-Airbags ausgeführt. Eine entsprechende Sensorik, wie sie beispielsweise aus der EP 0531989 B1 bekannt ist, reagiert auf eine Querbeschleunigung des Fahrzeugs, wie sie durch ein eindringendes Objekt hervorgerufen wird. Bedingt durch die kurze Reaktionszeit sowie den relativ geringen Abstand der dem Objekt zugewandten Fahrzeuginsassen ist eine derartige Vorrichtung sehr zeitkritisch und kann in der Regel lediglich eine körperliche Beeinträchtigung bzw. Verletzung der Fahrzeuginsassen allenfalls mildem, jedoch keinesfalls ausschließen.

Der Erfindung liegt die Aufgabe zugrunde, eine Vorrichtung der eingangs genannten Art zu schaffen, die gegenüber bekannten derartigen Vorrichtung ein wesentlich höheres Maß an Sicherheit für die Fahrzeuginsassen bietet.

Die Erfindung löst diese Aufgabe durch die kennzeichnenden Merkmale des Patentanspruchs 1.

Durch den optischen Sensor ist es möglich, das Annäherungsverhalten des Objektes zu ermitteln. Es ist möglich, die Relativgeschwindigkeit, die Bewegungsbahn und den voraussichtlichen 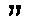 Auftreffpunkt" des Objektes in der Fahrzeugkarosserie zu bestimmen. Diese Bestimmung erfolgt, bevor das Objekt in das Fahrzeug eindringt. Es bleibt somit ausreichend Zeit, die Sicherheitsmaßnahme auszulösen.

Bei dieser Sicherheitsmaßnahme kann es sich, wie an sich bekannt, um das Auslösen eines Seiten-Airbags handeln. Im Gegensatz zu bekannten derartigen Airbags kann der Airbag dann ein größeres Volumen besitzen und auch in einem größeren Abstand vom Fahrzeuginsassen vorgesehen sein. Für das Entfalten des Airbags bleibt in jedem Fall ausreichend Zeit. Dadurch wird der Schutz des Fahrzeuginsassens erhöht.

Eine Alternative bzw. Ergänzung zu einem Seiten-Airbag besteht in einer Maßnahme, die unter der Bezeichnung aktive Sicherheit seit langem bekannt ist. Im Rahmen der vorliegenden Erfingung kann die Sicherheitsmaßnahme darin bestehen, die Eigenbewegung des Fahrzeugs gezielt zu beeinflussen. Das Fahrzeug kann selbsttätig beschleunigt bzw. verzögert werden. Dadurch kann der 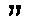 Auftreffpunkt" des Objektes aus dem kritischen Bereich der Fahrgastzelle heraus und in den Bereich des Motorraums bzw. Kofferraums verlegt werden. Ein derartige Seitencrash ist mit einer wesentlich geringeren Beinträchtigung der Gesundheit der Fahrzeuginsassen verbunden. Im Idealfall kann die Eigenbewegung des Fahrzeugs sogar so verändert werden, daß das Objekt das Fahrzeug überhaupt nicht trifft.

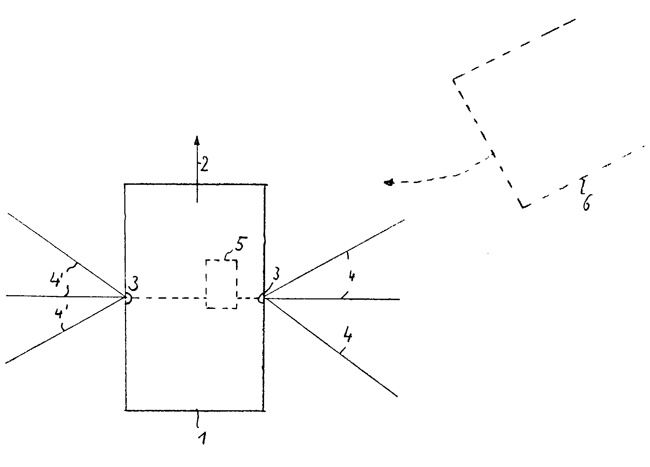

Anhand der Zeichnung ist die Erfindung weiter erläutert.

Die einzige Figur zeigt von oben ein Fahrzeug 1, das sich in Richtung eines Pfeils 2 bewegt. Seitlich sitzt jeweils ein Sensor 3 beispielsweise in Verbindung mit einem nicht dargestellten Türgriff einer Fahrzeugtür. Der Sensor 3 sendet fächerförmig Lichtblitze nacheinander aus, die als Strahlen 4 dargestellt sind. Nacheinander bedeutet dabei, daß längs der durch die Strahlen 4 vorgegebenen Richtung nacheinander jeweils mehrere Lichtblitze ausgesandt werden. Die Lichtblitze der in einer Ebene liegenden Strahlen können gleichzeitig oder aber auch zeitlich nach Art eines Multiplex versetzt ausgesandt werden.

Mit dem Sensor 3 verbunden sind nicht dargestellte optische Empfänger, die den Strahlen 4 zugeordnet sind und die aus der durch die Strahlen 4 vorgegebenen Richtung einfallendes reflektiertes Licht aufnehmen und einer Recheneinheit 5 zuleiten.

Abhängig von der Reichweite der Lichtblitze kann ein Objekt, hier strichliert als Fahrzeug 6 dargestellt, bereits in einem größeren Abstand von einigen Metern vom Fahrzeug 1 detektiert werden und aufgrund seines Reflektionsverhaltens in seinem Annäherungsverhalten an das Fahrzeug 1 analysiert werden. Zeigt sich durch diese in der Recheneinheit 5 durchgeführte Analyse, daß sich das Objekt 6 mit großer Wahrscheinlichkeit auf Kollisionskurs zum Fahrzeug 1 befindet, so kann rechtzeitig (d. h. unmittelbar vor dem Auftreffen des Objekts 6 auf das Fahrzeug 1) eine nicht dargestellte Seiten-Airbageinrichtung ausgelöst werden und/oder das Fahrzeug 1 in seiner Bewegung beeinflußt werden. Es kann beispielsweise stark abgebremst werden, so daß das Objekt 6 das Fahrzeug 1 nur im Bereich des Motorraums trifft.

Die für die Beeinflussung der Eigenbewegung erforderliche Berechnung der Bewegungsbahn und der Geschwindigkeit des Objektes 6 und deren Bezug zur Eigenbewegung des Fahrzeugs 1, d. h. der Richtung und der Geschwindigkeit des Fahrzeugs 1, sowie der voraussichtliche 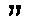 Kreuzungspunkt" des Fahrzeugs 1 und des Objektes 6 wird durch die Recheneinheit 5 lange vor der Kollision ausgeführt. Die hierfür erforderliche Rechenzeit steht in ausreichendem Maße zur Verfügung.

Die Verwendung eines optischen Sensors mit strahlenförmigem Aussenden von Lichtblitzen ist gegenüber einer denkbaren Verwendung eines Radar-Sensors zur Ermittlung des Annäherungsverhaltens des Objektes 6 vorteilhaft, da nur durch die bei einem optischen Sensor mögliche strahlenförmige Aussendung von Lichtstrahlen, einerseits gebündelt und andererseits mit definiertem räumlichen Abstand voneinander, es möglich ist, Bewegungsbahn und Geschwindigkeit des Objektes eindeutig zu bestimmen. Dadurch ergibt sich ein räumliches Auflösungsvermögen, aufgrund dessen es möglich wird, den voraussichtlichen Auftreffpunkt des Objektes 6 vorherzusehen.

## Patentansprüche

1. Vorrichtung zum Ausführen einer Sicherheitsmaßnahme bei einer die Gesundheit der Insassen gefährdenden seitlichen Annäherung eines Objektes an ein Fahrzeug, gekennzeichnet durch einen im Fahrzeug (1) angeordneten optischen Sensor (3) mit mehreren fächerförmig zur Seite ausgesandten Lichtblitzen (4, 4') und diesen zugeordneten Empfängern (3) und ferner durch eine Recheneinheit (5), die aus den von einem Objekt (2) reflektierten Lichtblitzen dessen Annäherungsverhalten ermittelt und gegebenenfalls die Sicherheitsmaßnahme auslöst.

2. Vorrichtung nach Anspruch 1,
dadurch gekennzeichnet,
daß die Sicherheitsmaßnahme im Auslösen eines Seiten-Airbags besteht.

3. Vorrichtung nach Anspruch 1 oder 2
dadurch gekennzeichnet,
daß die Sicherheitsmaßnahme in der gezielten Beeinflussung der Eigenbewegung des Fahrzeugs besteht.
